# EUROPÄISCHE PATENTSCHRIFT

(11) **EP 0 730 754 B1**
(45) Veröffentlichungstag und Bekanntmachung des Hinweises auf die Patenterteilung: **15.10.2003**
(21) Anmeldenummer: 95928880.4
(22) Anmeldetag: 30.08.1995
(51) Int. Cl.: G02C 7/08

(54) **LUPENBRILLE MIT VARIABLEM FOKUS, VARIABLEM VERGRÖSSERUNGSFAKTOR UND AUTOMATISCHEM PARALLAXEAUSGLEICH**
MAGNIFYING GLASS HAVING A VARIABLE FOCUS, VARIABLE ENLARGEMENT RATIO AND AUTOMATIC PARALLAX CORRECTION
LUNETTE A VERRE GROSSISSANT A FOYER VARIABLE, A RAPPORT D'AGRANDISSEMENT VARIABLE ET A CORRECTION AUTOMATIQUE DE PARALLAXE

(30) Priorität: 22.09.1994 AT 179594
(43) Veröffentlichungstag der Anmeldung: 11.09.1996
(73) Patentinhaber: Life Optics GmbH, 1160 Wien (AT)
(72) Erfinder: OFNER, Anton, Gerald, A-1190 Wien (AT)
(74) Vertreter: Beer, Manfred, Dipl.-Ing.
(86) Internationale Anmeldenummer: AT9500173
(87) Internationale Veröffentlichungsnummer: WO96009566

(56) Entgegenhaltungen:
- WO-A-91/17465
- DE-A- 4 004 248
- DE-B- 1 165 899
- DE-U- 9 303 663
- FR-A- 2 600 430
- US-A- 3 458 246
- US-A- 3 865 468
- US-A- 4 807 985
- US-A- 4 865 438

## Beschreibung

Die Erfindung betrifft eine Lupenbrille mit den Merkmalen des einleitenden Teils von Anspruch 1.

Lupenbrillen dieser Gattung finden vorwiegend in jenen chirurgischen Gebieten Anwendung, bei denen aus technischen und anatomischen Gründen ein Operationsmikroskop nicht eingesetzt werden kann, und das bloße menschliche Auge zu schwach ist. Normalerweise sind dies die Gefäßchirurgie und die Neurochirurgie. Häufig ist es während einer Operation wünschenswert oder sogar erforderlich, den Arbeitsabstand, d.h. den Abstand zwischen den Augen des Chirurgen und der Operationsstelle und/oder den Vergrößerungsfaktor der Lupenbrille zu ändern.

Die bekannten Lupenbrillen erfüllen dieses Erfordernis nicht oder nur unvollkommen.

Eine Lupenbrille mit den Merkmalen des einleitenden Teils von Anspruch 1 ist aus der WO 91/17465 A bekannt. Diese bekannte Lupenbrille besitzt Linsensysteme mit einer Autofokussiereinrichtung, mit der die Objektive verstellt werden können, um die Linsensysteme durch Ändern der Brennweite auf den gemessenen Abstand so einzustellen. dass das durch die Linsensysteme betrachtete Objekt scharf gesehen wird. In der WO 91/17465 A ist auch die Möglichkeit erwähnt, die optischen Achsen der Linsensysteme so zu verstellen, dass sie mit der optischen Achse des betreffenden Auges zusammenfallen. Eine Möglichkeit, den Vergrößerungsfaktor der Linsensysteme zu verändern ("Zoomen"), ist in WO 91/17465 A nicht erwähnt.

Aus der US-4,865,438 A ist eine Lupenbrille für chirurgische Zwecke bekannt, bei der die Brennweite automatisch an den mittels Ultraschall- oder Lichtsensoren ermittelten Objektabstand angepasst wird, so dass das Objekt stets scharf gesehen wird.

In der US-3,865,468 A wird eine Lupenbrille beschrieben, deren Vergrößerungsfaktor durch Ein- und Ausschwenken von zusätzlichen Linsen verändert werden kann. Die Linsensysteme sind bei dieser bekannten Lupenbrille an einem brillenartigen Gestell montiert, wobei der Abstand der Linsensysteme voneinander verändert werden kann, um diesen an den Augenabstand eines Benutzers anzupassen. Die aus der US-3,865,468 A bekannte Lupenbrille besitzt keine Autofokussiereinrichtung und auch keine Vorrichtung, mit welcher der Winkel zwischen den optischen Achsen der Linsensysteme verändert werden kann.

Die FR-2 600 430 A beschreibt eine Brille mit abnehmbaren Zusatzlinsen, durch die scharfes Sehen auch für stark schwachsichtige Personen mit geringem Abstand zum betrachteten Objekt möglich sein soll. Eine Autofokussiereinrichtung, eine Zoom-Einrichtung zum Ändern des vergrößerungsfaktors der bekannten Brille ebensowenig beschrieben wie eine Vorrichtung, mit welcher der Winkel zwischen den optischen Achsen der Linsensysteme verändert werden kann.

Die US-4,807,985 A beschreibt eine Fernrohrbrille für sehschwache Personen zum Betrachten von nahen und fernen Objekten. Diese Brille besitzt Vorrichtungen zum automatischen Ändern der Brennweite und zum Anpassen des Neigungswinkels an die Kopfstellung des Benutzers.

In der US-5,078,469 A ist eine Lupenbrille beschrieben, die für chirurgische Zwecke bestimmt ist und die mit einer ein Zoom-Linsensystem aufweisenden Videokamera ausgestattet ist. Mit dieser Videokamera soll sowohl ein fotografisches Aufzeichnen als auch ein Übertragen des mittels Faseroptik ausgeleuchteten Gesichtsfeldes des Operateurs zu entfernt gelegenen Stationen möglich sein.

Ein Benutzer von Fixfokus-Brillen muss sich in bestimmten Situationen (etwa bei einer Arbeit in der Bauchhöhle) wegen des Erfordernisses eines konstanten Abstandes zwischen Augen und betrachtetem Objekt mit dem Kopf dem Objekt, z.B. der geöffneten Bauchdecke, annähern. Dann nimmt der Benutzer nicht nur eine ergonomisch ungünstige Körperhaltung ein, sondern er gelangt mit seinem Kopf in das Gesichtsfeld von Assistenzärzten, was die Assistenzleistung erschwert.

Lupenbrillen mit händisch verstellbarem Vergrößerungsfaktor schaffen hier keine Abhilfe, da der Vergrößerungsfaktor aus Sterilitätsgründen nur vor, nicht jedoch während einer Operation verändert werden dar.

Der Erfindung liegt die Aufgabe zu Grunde, die genannten Nachteile zu vermeiden.

Gelöst wird diese Aufgabe erfindungsgemäß mit einer Lupenbrille, welche die Merkmale des unabhängigen Anspruch 1 aufweist.

In einer Ausführungsform ist die erfindungsgemäße Lupenbrille dadurch gekennzeichnet, dass die Vorrichtung zum Ändern des Vergrößerungsfaktors zum stufenlosen Verändern des Vergrößerungsfaktors mit einem Fußschalter verbunden ist.

In einer anderen Ausführungsform der erfindungsgemäßen Lupenbrille ist vorgesehen, dass die Autofokussiereinrichtung wahlweise deaktivierbar und aktivierbar ist.

In einer weiteren Ausführungsform der erfindungsgemäßen Lupenbrille kann vorgesehen sein, dass sie eine Vorrichtung zum sprachgesteuerten Ändern der Brennweite mit Hilfe der Autofokussiereinrichtung und zum Ändern des Vergrößerungsfaktors mit Hilfe der "Zoom"-Linsensysteme und der "Zoom"-Mechaniken aufweist.

Schließlich kann sich die erfindungsgemäße Lupenbrille noch dadurch auszeichnen, dass in die Fokusebene der Linsensysteme eine dem jeweiligen Vergrößerungsfaktor angepasste Messskala zum genauen, größenmäßigen Bestimmen von Objekten einblendbar ist.

Ausführungsbeispiele erfindungsgemäßer Lupenbrillen werden im Folgenden an Hand der Zeichnungen näher erläutert.

Es zeigt:
Fig. 1 eine erfindungsgemäße Lupenbrille in einer ersten Ausführung mit einer Fokussiervorrichtung zum Fokussieren der Linsensysteme, gekoppelt mit einer Vorrichtung zum automatischen Anpassen des Winkels zwischen den optischen Achsen der Linsensysteme an die jeweilige Brennweite und mit einem Zoom-Linsensystem und
Fig. 2 eine Ausführungsfonn der erfindungsgemäßen Lupenbrille mit einer Vorrichtung zum sprachgesteuerten Ändern der Brennweite und des Vergrößerungsfaktors.

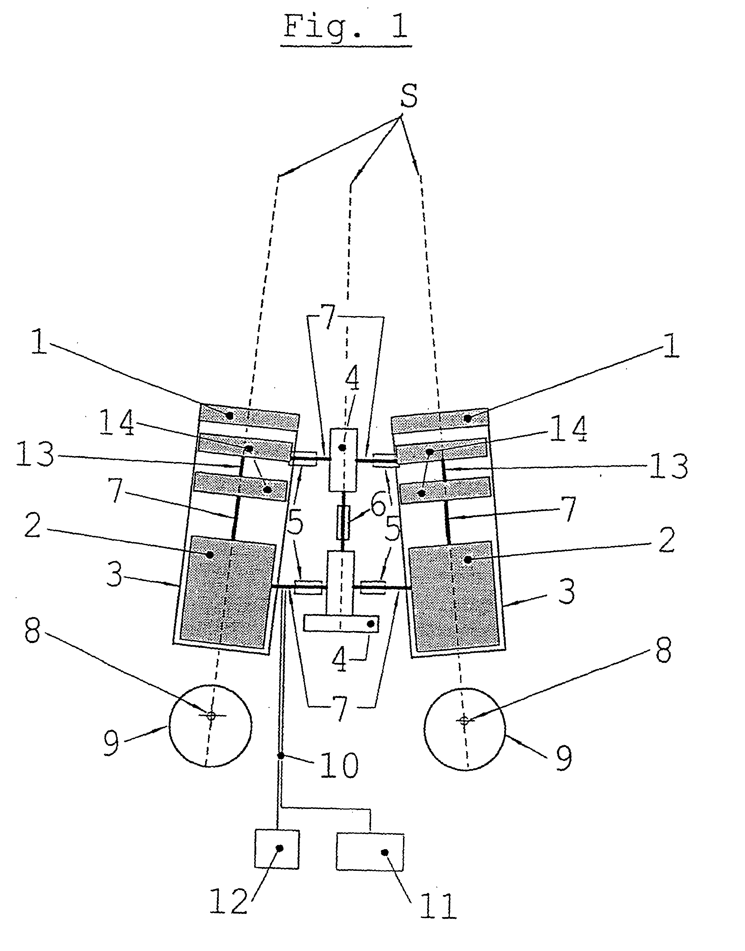

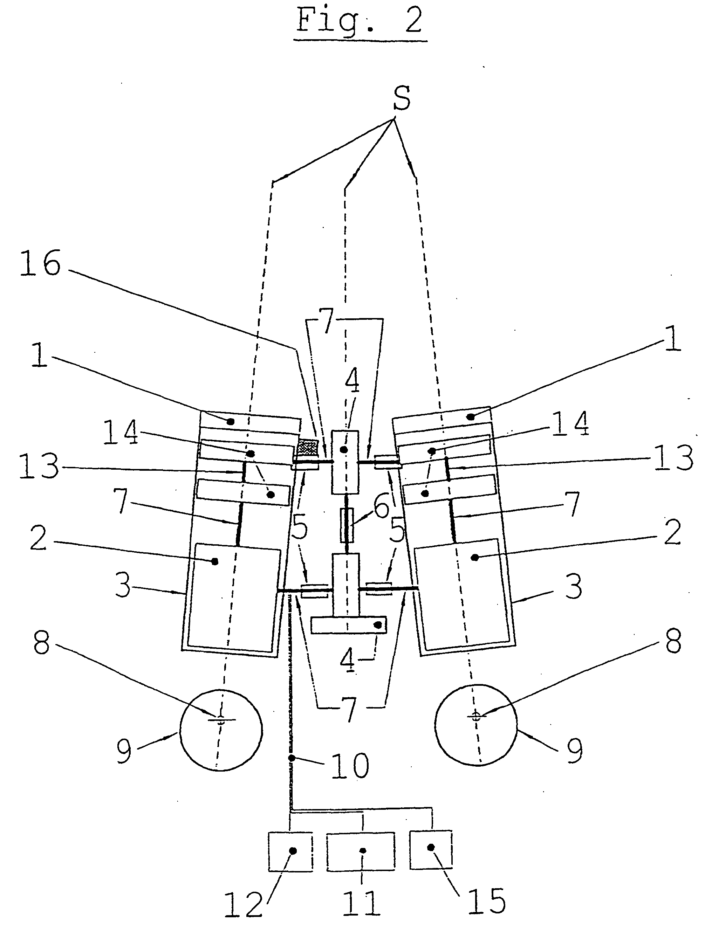

Die Linsensysteme der in den Fig. 1 und 2 gezeigten Lupenbrillen bestehen jeweils aus einem Objektiv 1 und einem Okular 2. Die Linsensysteme sind in zwei Tuben 3 angeordnet.

In bzw. zwischen den Tuben 3 sind eine Autofokussiereinrichtung 4 und ein Elektromotor 6 für das Ändern der Brennweite der Linsensysteme durch die Autofokussiereinrichtung 4 zum Fokussieren der Linsensysteme angeordnet.

Weiters sind in bzw. zwischen den Tuben 3 Elektromotore 5 für das Ändern des Winkels zwischen den optischen Achsen S der Linsensysteme bei Brennweitenänderung und die zugehörige Positioniermechanik 7 angeordnet. Durch diese Änderung des Winkels zwischen den optischen Achsen S der Linsensysteme wird gewährleistet, dass die optischen Achsen S in jeder Stellung der Tuben 3 durch die Projektionszentren, d.h. durch die optischen Mittelpunkte 8 der Augen 9 laufen.

Zum Ändern des Vergrößerungsfaktors ist die Lupenbrille als "Zoom"-Brille ausgebildet und mit einem "Zoom"-Linsensystem 14 in den Tuben 3 und einer zugehörigen "Zoom"-Mechanik 13 ausgestattet.

Ein Kabel 10 verbindet die Lupenbrille mit einem Fußschalter 11, durch dessen Betätigen die Fokussierung bewirkt und weiters der Vergrößerungsfaktor der Linsensysteme ("Zoom"-Linsen 13 mit "Zoom"-Mechanik 14) verändert werden kann.

Eine externe, an einer Kopfhalterung der Lupenbrille oder an einem Gürtel des Anwenders oder an einer anderen Stelle angebrachte Steuer- und Regeleinheit 12 enthält die Stromversorgung für die Mechanik sowie einen Chip für die Ansteuerung der Elektromotoren 5 und 6 der Mechanik und für die Errechnung der optischen Elemente. Die Steuer- und Regeleinheit 12 berechnet den im aktiven Arbeitsabstand benötigten Winkel der optischen Achsen S zueinander sowie die Position der Linsen in den Objektiven 1 und Okularen 2 und positioniert diese mit Hilfe der Elektromotoren 5 bzw. 6 und der Positioniermechanik 7.

Bei dem in Fig. 2 gezeigten Ausführungsbeispiel einer erfindungsgemäßen Lupenbrille ist diese zusätzlich mit einem Sprachsteuerungsmodul 15 mit Mikrophon 16 ausgerüstet. Durch diese Sprachsteuerung 15 kann die Autofokussiereinrichtung 4 zum Verändern der Brennweite und die Vorrichtung zum Ändern des Vergrößerungsfaktors mit den "Zoom"-Linsensystemen 14 und den zugehörigen "Zoom"-Mechaniken 13 gesteuert werden.

Gemäß einer in den Zeichnungen nicht gezeigten Ausführungsform kann die Autofokussiereinrichtung 4 wahlweise deaktiviert oder aktiviert werden.

Gemäß einer ebenfalls in den Zeichnungen nicht gezeigten Ausführungsform kann in die Fokusebene eine dem jeweils eingestellten Vergrößerungsfaktor angepasste Messskala eingeblendet werden. Mit dieser eingeblendeten Messskala können Objekte größenmäßig genau bestimmt werden.

## Patentansprüche

1. Lupenbrille mit zwei Linsensystemen, die jeweils ein Objektiv (1) und ein Okular (2) aufweisen, mit einer den Linsensystemen zugeordneten Autofokussiereinrichtung (4) zum automatischen Fokussieren der Linsensysteme auf den aktiven Arbeitsabstand, mit einer mit der Autofokussiereinrichtung (4) gekoppelten Vorrichtung (5,7) zum automatischen Anpassen des Winkels, unter dem die optischen Achsen (S) der Linsensysteme zueinander ausgerichtet sind, an den durch die Autofokussiereinrichtung (4) erfassten Arbeitsabstand derart, dass die optischen Achsen (S) der Linsensysteme in jeder Stellung der Linsensysteme durch die optischen Mittelpunkte (8) der Augen (9) eines Benutzers laufen, **dadurch gekennzeichnet, dass** die Lupenbrille in jedem Linsensystem zusätzlich eine Vorrichtung (13,14) zum Ändern des Vergrößerungsfaktors der Linsensysteme aufweist, wobei die Objektive (1) der Linsensysteme der Lupenbrille als "Zoom"-Linsensystem (14) mit je einer zugehörigen "Zoom"-Mechanik (13) ausgebildet sind, und dass die Vorrichtung (5,7) zum Anpassen des Winkels der optischen Achsen (S) der Linsensysteme zwei von Elektromotoren (5) betätigte Positioniermechaniken (7), die mit Abstand voneinander an den die Linsensysteme aufnehmenden Tuben (3) angreifen, aufweist.

2. Lupenbrille nach Anspruch 1, **dadurch gekennzeichnet, dass** die Vorrichtung (13,14) zum Ändern des Vergrößerungsfaktors mit einem Fußschalter (11) zum stufenlosen Verändern des Vergrößerungsfaktors verbunden ist.

3. Lupenbrille nach Anspruch 1, **dadurch gekennzeichnet, dass** die Autofokussiereinrichtung (4) wahlweise deaktivierbar und aktivierbar ist.

4. Lupenbrille nach Anspruch 1, **dadurch gekennzeichnet, dass** sie eine Vorrichtung (15,16) zum sprachgesteuerten Ändern der Brennweite mit Hilfe der Autofokussiereinrichtung (4) und zum Ändern des Vergrößerungsfaktors mit Hilfe der "Zoom"-Linsensysteme (14) und der "Zoom"-Mechaniken (13) aufweist.

5. Lupenbrille nach Anspruch 1, **dadurch gekennzeichnet, dass** in die Fokusebene der Linsensysteme eine dem jeweiligen Vergrößerungsfaktor angepasste Messskala zum genauen, größenmäßigen Bestimmen von Objekten einblendbar ist.

## Claims

1. Magnifying loupe with two lens systems, which respectively have an objective (1) and an eyepiece (2), with an autofocus (4) associated with the lens systems for automatic focussing of the lens systems to the active working distance, with a device (5, 7) coupled to the autofocus (4) for automatic adaptation of the angle, at which the optical axes (S) of the lens systems are oriented to one another, to the working distance detected by the autofocus (4) in such a manner that in each position of the lens systems the optical axes (S) of the lens systems run through the optical centres (8) of the eyes (9) of a user, **characterised in that** in each lens system the magnifying loupe additionally has a device (13, 14) for varying the magnification factor of the lens systems, wherein the objectives (1) of the lens systems of the magnifying loupe are configured as a zoom lens system (14), each having an associated zoom mechanism (13), and that the device (5, 7) for adaptation of the angle of the optical axes (S) of the lens systems has two positioning mechanisms (7), which are operated by electric motors (5) and spaced from one another act on the tubes (3) housing the lens systems.

2. Magnifying loupe according to Claim 1, **characterised in that** the device (13, 14) for varying the magnification factor is connected to a foot switch (11) for infinitely varying the magnification factor.

3. Magnifying loupe according to Claim 1, **characterised in that** the autofocus (4) may be selectively deactivated and activated.

4. Magnifying loupe according to Claim 1, **characterised in that** it has a device (15, 16) for varying the focal length by voice control by means of the autofocus (4) and for varying the magnification factor by means of the zoom lens systems (14) and the zoom mechanisms (13).

5. Magnifying loupe according to Claim 1, **characterised in that** a measurement scale adapted to the respective magnification factor may be superimposed into the plane of focus of the lens systems to precisely determine the size of objects.

## Revendications

1. Lunette grossissante avec deux systèmes de lentilles qui comprennent chacun un objectif (1) et un oculaire (2), avec un dispositif de mise au point automatique (4) associé au système de lentilles pour la mise au point automatique du système de lentilles sur la distancé de travail active, avec un dispositif (5, 7), couplé au dispositif de mise au point automatique (4), pour adapter de manière automatique l'angle sous lequel les axes optiques (S) des systèmes de lentilles sont orientés l'un par rapport à l'autre à la distance de travail mesurée par le dispositif de mise au point automatique (4), de telle sorte que les axes optiques (S) des systèmes de lentilles passent par les centres optiques (8) des yeux (9) d'un utilisateur, **caractérisée en ce que** la lunette grossissante, dans chaque système de lentilles, comporte en plus un dispositif (13, 14) pour modifier le facteur de grossissement, les objectifs (1) des systèmes de lentilles de la lunette grossissante étant conformés en "zoom" avec chacun un mécanisme de "zoom" (13) associé, et **en ce que** le dispositif (5, 7) pour adapter l'angle des axes optiques (S) des systèmes de lentilles comprend deux mécanismes de positionnement (7) actionnés par des moteurs électriques (5) qui agissent à distance l'un de l'autre sur les tubes (3) recevant les systèmes de lentilles.

2. Lunette grossissante selon la revendication 1, **caractérisée en ce que** le dispositif (13, 14) pour modifier le facteur de grossissement est relié à un commutateur à pédale (11) pour faire varier de manière progressive le facteur de grossissement.

3. Lunette grossissante selon la revendication 1, **caractérisée en ce que** le dispositif de mise au point automatique (4), peut être désactivé et activé de manière sélective.

4. Lunette grossissante selon la revendication 1, **caractérisée en ce qu'**elle comprend un dispositif (15, 16) pour modifier par commande vocale la distance focale à l'aide du dispositif de mise au point automatique (4) et pour modifier le facteur de grossissement à l'aide des systèmes de lentilles de type "zoom" (14) et des mécanismes de "zoom" (13).

5. Lunette grossissante selon la revendication 1, **caractérisée en ce qu'**une échelle de mesure adaptée au facteur de grossissement concerné peut être affichée dans le plan focal des systèmes de lentilles, aux fins de déterminer avec précision les dimensions des objets.
